# EUROPEAN PATENT SPECIFICATION

(11) **EP 4 396 062 B1**
(45) Date of publication and mention of the grant of the patent: **17.12.2025**
(21) Application number: 22772949.8
(22) Date of filing: 02.09.2022
(51) Int. Cl.: B62B 7/06, B62B 9/10, B62B 9/22

(54) **MOVING CARRIER AND METHOD FOR ADJUSTING TILT ANGLE OF SEAT OF MOVING CARRIER**
BEWEGLICHER TRÄGER UND VERFAHREN ZUR ANPASSUNG DES NEIGUNGSWINKELS EINES SITZES EINES BEWEGLICHEN TRÄGERS
SUPPORT MOBILE ET PROCÉDÉ DE RÉGLAGE DE L'ANGLE D'INCLINAISON D'UN SIÈGE DE SUPPORT MOBILE

(30) Priority: 02.09.2021 CN 202111027886
(43) Date of publication of application: 10.07.2024
(73) Proprietor: Wonderland Switzerland AG, 6312 Steinhausen (CH)
(72) Inventor: CHENG, Manqun, 6312 Steinhausen (CH)
(74) Representative: Lucke, Andreas
(86) International application number: PCT/EP2022/074504
(87) International publication number: WO 2023/031423

(56) References cited:
- CN-A- 112 339 833
- JP-A- 2002 293 245
- KR-B1- 101 521 587
- US-A1- 2006 124 366

## Description

### TECHNICAL FIELD

The present invention relates to a moving carrier and a method for adjusting a tilt angle of a seat of a moving carrier.

### BACKGROUND

A child stroller is commonly used to carry a child and can be pushed and moved by child's guardians. The child stroller usually has a frame, a moving mechanism and a seat. The frame is configured to be assembled with other parts of the child stroller. The moving mechanism allows the child stroller to be moved, and is usually a wheel set that is installed under the frame. The seat is configured to carry a child, and is usually installed in the middle of the frame.

In the prior art, the seat and the frame are usually fixed together, that is, a pitch angle between the frame and the seat is not adjustable. In this way, when the child stroller travels on a non-horizontal surface (for example, a surface having a slope or stairs), the frame is in a non-horizontal position, that is, the frame may tilt forward (tilt down) or tilt rearward (tilt up). At this time, the seat is tilted along with tilting of the frame. As a result, the seat may be in a non-horizontal state, which causes that the child in the seat tends to slide forward or rearward. It is neither comfortable nor safe for the child in the seat.

Therefore, it is necessary to provide a seat adjustment framework, which can automatically adjust a tilt angle of the seat according to a pitch angle of the frame, so that the seat is kept in a horizontal state.

JP 2002 293245 A describes a stair climbing vehicle. US 2006/124366 A1 describes a powered wheelchair. CN 112 339 833 A describes a conventional stroller with seats having an adjustable pitch angle. KR 101 521 587 B1 describes a moving cart.

### SUMMARY

According to the present invention a child stroller, comprises: a frame; a seat arranged on the frame and capable of pitching around a rotation axis relative to the frame; a driving device installed on the frame and coupled to the seat, the driving device being configured to drive the seat to pitch with relative to the frame; and a sensor configured to acquire a tilt angle of the seat relative to a horizontal plane and generate tilt angle data based on the tilt angle, wherein the sensor is electrically connected to the driving device so that the driving device operates to adjust the tilt angle of the seat according to the tilt angle data. A seat adjustment structure comprises said driving device, said sensor, and an actuating mechanism. The seat adjustment structure is fixed to the frame and at least partially located below the seat.

In an embodiment, the driving device is arranged between the frame and the seat; and the child stroller further comprises an actuating mechanism having an end connected to the driving device, and another end hinged below the seat to support the seat, the actuating mechanism is capable of being driven by the driving device to extend and retract, so that the seat is driven to rotate relative to the frame around a rotation axis, thereby changing an angle between the frame and the seat.

In an embodiment, the seat is fixed to a transverse pivot shaft, and the transverse pivot shaft is rotatably connected to the frame; the driving device is coupled to the transverse pivot shaft and is capable of driving rotation of the transverse pivot shaft.

In an embodiment, the rotation axis is a horizontal axis of the seat, and the actuating mechanism extends and retracts in a vertical direction.

In an embodiment, the driving device is a motor; the actuating mechanism includes a lead screw and a screw sleeve, wherein the lead screw has an end connected to the motor so that the motor drives the lead screw to rotate during operation thereof and has another end of screwed with one end of the screw sleeve, and the other end of the screw sleeve is hinged below the seat.

In an embodiment, the sensor is installed on the seat to acquire the tilt angle of the seat relative to the horizontal plane; or the sensor is installed on the frame to acquire the tilt angle of the frame relative to the horizontal plane, and the tilt angle of the seat relative to the horizontal plane is acquired by calculation according to the tile angle of the frame as well as a positional relationship between the frame and the seat.

In an embodiment, the child stroller further includes a base fixed to the frame, and the driving device is hinged to the base.

In an embodiment, the actuating mechanism further includes a linkage structure hinged to the frame, and the driving device is fixedly installed on the linkage structure.

In an embodiment, the driving device and the actuating mechanism are located at a transversal middle location below the seat.

In an embodiment, two sets of driving devices and actuating mechanisms are symmetrically and respectively located at two ends of the seat in a transverse direction.

In an embodiment, child stroller further comprises a controller electrically connected to the sensor and the driving device, the controller calculates a movement amount of the driving device according to the tilt angle data acquired by the sensor, and converts the movement amount into a control signal and sends the control signal to the driving device.

In an embodiment, the child stroller further comprises a communication module electrically connected to the controller and wirelessly connected to a remote control terminal, the remote control terminal is capable of sending a signal to the communication module, and the communication module transmits the signal to the controller.

According to a non-claimed embodiment, a method for adjusting a tilt angle of a seat of a moving carrier comprises: detecting the tilt angle A of the seat on the moving carrier through a sensor on the moving carrier; when the tilt angle is equal to zero, a driving device arranged on the moving carrier is not started; when the tilt angle is not equal to zero, the driving device is started to drive the seat to tilt in a direction for decreasing an absolute value |A| of the tilt angle A until the tilt angle A is equal to zero.

According to an embodiment, a method for adjusting a tilt angle of a seat of a child stroller comprises: presetting a threshold tilt angle At; detecting the tilt angle A of the seat on the child stroller by a sensor on the child stroller ; when an absolute value |A| of the tilt angle A is less than the threshold tilt angle, a driving device on the child stroller is not started; and when the absolute value |A| of the tilt angle A is greater than or equal to the threshold tilt angle At, the driving device is started to operate so as to reduce |A| until the tilt angle A is less than the threshold tilt angle At.

The method further comprises presetting a time threshold T0; wherein when the absolute value |A| of the tilt angle A is greater than or equal to the threshold tilt angle At, timing is started while the tilt angle A is continuously detected, and when a time period T is greater than or equal to the time threshold T0 and the absolute value |A| of the tilt angle A is not less than the threshold tilt angle At during the time period T, the driving device is started to operate so as to reduce the absolute value |A| until the tilt angle A is less than the threshold tilt angle At, and when the time period T is less than the time threshold T0 and the absolute value |A| of the tilt angle A is less than the threshold tilt angle At during the time period T, the tilt angle Ais re-detected and the timing is cleared.

According to an embodiment, a method for adjusting a tilt angle of a seat of a child stroller comprises: presetting a fixed time interval Ts, a number of detection cycles i, and a threshold tilt angle At; detecting the tilt angle A of the seat on the child stroller once in every detection cycle through the sensor on the child stroller, and sequentially recording the detected tilt angel A as A0, A1, A2... Aj; calculating an average value Am of Aj-i, Aj-i+1... Aj when j≥i at any time; if |Am|>At, adjusting the tilt angle A of the seat through the driving device on the child stroller such that Am=0 and clearing the recorded tilt angle data.

### BRIEF DESCRIPTION OF THE DRAWINGS

Embodiments of the present invention will be described in detail below with reference to the accompanying drawings, in which:
FIG. 1 shows a child stroller according to the prior art, in which a frame and a plurality of wheels are shown;
FIG. 2 shows a child stroller according to the prior art, in which the frame, a seat and the wheels are shown;
FIG. 3 shows a child stroller according to the present disclosure, in which a seat adjustment structure according to one embodiment of the present disclosure is provided between the frame and the seat;
FIG. 4 shows the seat and the seat adjustment structure according to the present disclosure;
FIG. 5 shows a schematic side view of the seat and the seat adjustment structure according to the present disclosure, in which a base of the seat adjustment structure is in a horizontal position;
FIG. 6 shows a schematic side view of the seat and the seat adjustment structure according to the present disclosure, in which the base of the seat adjustment structure is in a tilting-forward position;
FIG. 7 shows a schematic side view of the seat and the seat adjustment structure according to the present disclosure, in which the base of the seat adjustment structure is in a tilting-rearward position;
FIG. 8 shows a flowchart of a method for adjusting a tilt angle of a seat of a moving carrier according to one embodiment of the present disclosure;
FIG. 9 shows a flowchart of a method for adjusting a tilt angle of a seat of a moving carrier according to another embodiment of the present disclosure;
FIG. 10 shows a flowchart of a method for adjusting a tilt angle of a seat of a moving carrier according to yet another embodiment of the present disclosure;
FIG. 11 shows a functional block diagram of the seat adjustment structure according to the present disclosure;
FIG. 12 shows a functional block diagram of a seat adjustment structure according to another embodiment of the present disclosure;
FIG. 13 shows an installation position of the seat adjustment structure according to another embodiment of the present disclosure;
FIG. 14 shows a schematic side view of the seat and the seat adjustment structure according to another embodiment of the present disclosure, in which a housing of the seat adjustment structure is in the horizontal position;
FIG. 15 shows a schematic side view of the seat and the seat adjustment structure according to another embodiment of the present disclosure, in which the housing of the seat adjustment structure is in a tilting-forward position; and
FIG. 16 is a schematic side view of the seat and the seat adjustment structure according to another embodiment of the present disclosure, wherein the housing of the seat adjustment structure is in a tilting-rearward position.

List of reference numbers:
100 Seat Adjustment Structure
   110 Base
   115 Housing
   120 Driving Device
   130 Actuating Mechanism
      131 Screw
      132 Turnbuckle
   140 Sensor
   151 First Articulated Shaft
   152 Transverse Pivot Shaft
   160 Controller
   170 Communication Module
   180 Remote Control Terminal
200 Seat
300 Frame
400 Child stroller (Prior Art)
A Tilt angle
At Threshold tilt angle
|A| Absolute Value of Tilt angle
T Time Period
T0 Time Threshold
Ts Time Interval
A0, A1, ... Aj Tilt angle Values recorded at Time Points 0-j
i Preset Number of Detection Cycles
Am Average Value of Tilt angle

### DETAILED DESCRIPTION

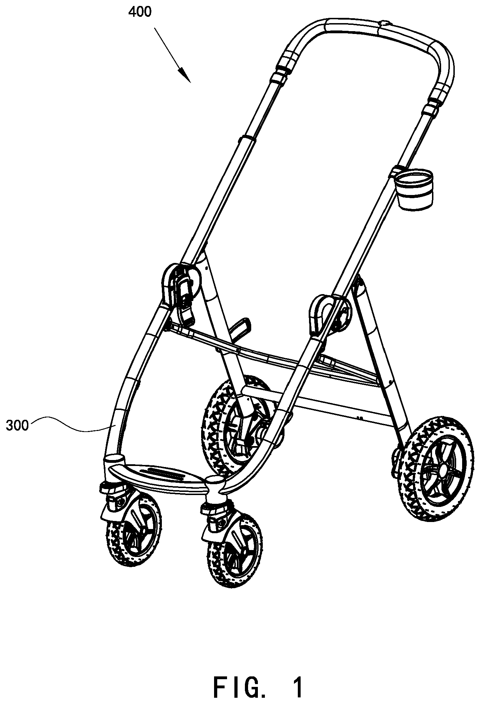

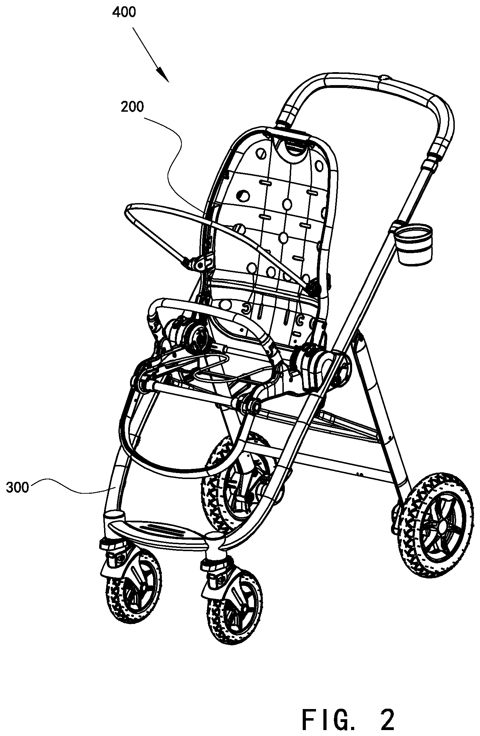

Referring to FIGS. 1 and 2, FIG. 1 shows a frame 300 of a child stroller 400 in the prior art, and FIG. 2 shows the frame 300 and a seat 200 of the child stroller 400 in the prior art. As shown in FIG. 2, the seat 200 is directly fixed to the frame 300, that is, the seat 200 cannot rotate relative to the frame 300. In this way, when a pitch angle of the frame 300 relative to a horizontal plane is changed (for example, during moving upward along an uphill or downward along a downhill), the seat 200 is tilted forward or rearward along with the pitch angle of the frame 300. It is uncomfortable and unsafe for an occupant.

Therefore, an embodiment of the present invention provides a child stroller 400, in which a seat 200 thereof can be automatically adjusted, so as to maintain a pitch angle of the seat 200 at a certain level when the pitch angle of the frame 300 is changed.

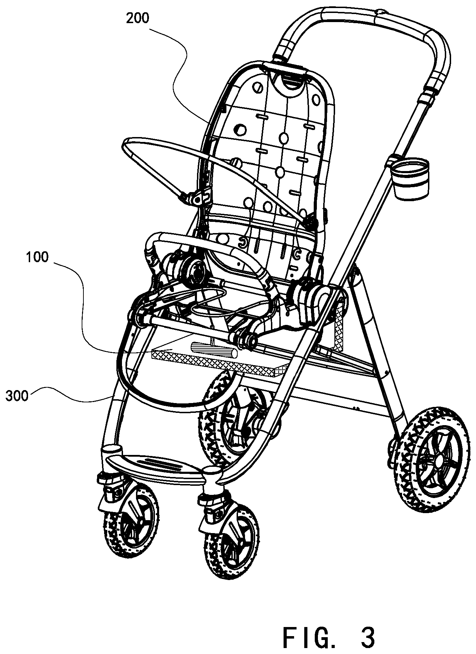

Reference is made to FIG. 3. The moving carrier according to the present invention is described as a whole, and in the instant embodiment, the moving carrier is a child stroller. As shown, the moving carrier includes a frame 300, a seat 200, a seat adjustment structure 100, wheels and an armrest. The seat 200 is pivotally installed to the frame 300 through a transverse pivot shaft, rather than fixedly installed to the frame 300. The transverse pivot shaft penetrates through a junction of a transverse part and a vertical part of the seat 200 as well as a middle part of a vertical frame of the frame 300, thereby connecting the seat 200 to the frame 300. In other embodiments, the transverse pivot shaft is arranged at a pivot position of a backrest part of the seat 200. Therefore, those skilled in the art should understand that the arrangement of the transverse pivot shaft is not limited in the present disclosure, as long as the seat 200 is allowed to rotate around a rotation axis (or a transverse axis) relative to the frame 300. The seat adjustment structure 100 is fixed to the frame 300 and at least partially located below the seat 200, so as to support and adjust the pitch angle of the seat 200.

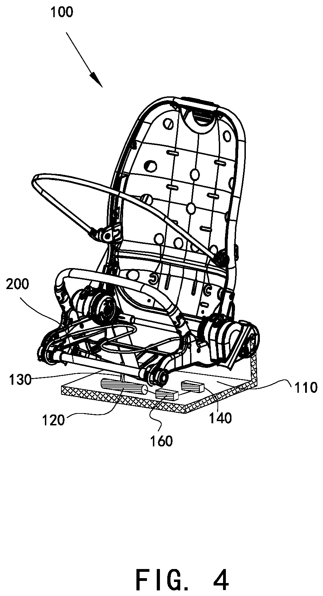

Reference is made to FIG. 4, in which the seat adjustment structure 100 according to the present disclosure is shown as a whole. The seat adjustment structure 100 includes a base 110, a driving device 120, an actuating mechanism 130, and a sensor 140. Reference is made to FIGS. 3-4. The base 110 is fixed to the frame 300 and carries other components of the seat adjustment structure 100. In the embodiment shown in FIG. 4, the base 110 is a plate-like component with an L-shaped cross section. The base 110 has an upper part fixedly connected to the frame 300 near the transverse pivot shaft of the seat 200, and a lower part extending horizontally toward a position below the front portion of the seat 200. It should be understood that the base 110 may also have other shapes, such as a simple horizontal plate or a frame including a plurality of bars. Instead of being connected to the frame 300 at the transverse pivot shaft of the seat 200, the base 110 may be connected to the frame 300 at any suitable position, as long as it can be disposed with other components of the seat adjustment structure 100.

Actually, the base 110 may be regarded as an extension of the frame 300. In some embodiments, the base 110 may be omitted, and other components of the seat adjustment structure 100 may be directly installed to the frame 300.

The driving device 120 is a power device that may provide an actuating force. The driving device 120 is disposed on an upper surface of the base 110 so as to be located between the base 110 and the seat 200. One end of the actuating mechanism 130 is installed in the driving device 120 from above of the driving device 120, and the other end of the actuating mechanism 130 is connected to the seat 200 from the underside of the seat 200 and supports the seat 200. The actuating mechanism 130 is located near an end of the seat 200 opposite to the transverse pivot shaft in a front-rear direction. A driving force may be output by the driving device 120 to change a length of the actuating mechanism 130 (which will be described in detail below). In this way, through the driving device 120 and the actuating mechanism 130, a height position of one end of the seat 200 is controllable (i.e., liftable) above the base 110 (or on the frame 300 in an embodiment without the base 110), thereby allowing a relative pitch angle between the seat 200 and the frame 300 to be controlled.

The sensor 140 is installed on the seat 200 or the base 110 of the seat adjustment structure 100 (the sensor 140 installed on the base 110 being shown in the figure), and is electrically connected to a controller 160. The controller 160 is electrically connected to the driving device 120. The controller 160 shown in FIG. 4 is installed on the base 110. However, it should be understood that the controller 160 may be installed at any position of the seat 200 or the frame 300, and the present disclosure is not limited thereto. The sensor 140 is configured to detect the pitch angle (or tilt angle) of the seat 200 relative to the horizontal plane and transmit the detected angle (or tilt angle data) to the driving device 120 through the controller 160. According to a preset program, the controller 160 determines how the driving device 120 outputs a driving force to control the pitch angle of the seat 200 according to tilt angle data transmitted by the sensor 140. The control method will be described in detail below.

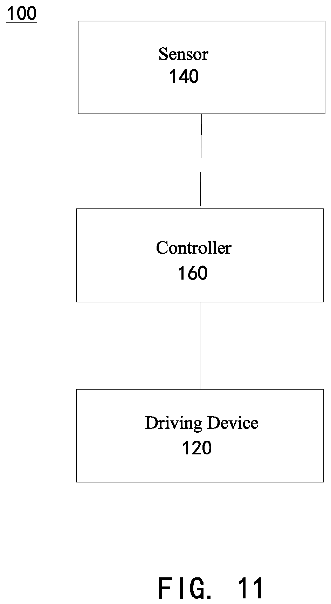

Referring to FIG. 11, FIG. 11 shows a functional block diagram of the seat adjustment structure 100 according to the present disclosure. As shown, the sensor 140 is electrically connected to the controller 160 so as to transmit the detected tilt angle data of the seat to the controller 160. According to a seat adjustment method of the present disclosure, the controller 160 determines how to control the driving device 120 by calculating the tilt angle data of the seat 200. Furthermore, the controller 160 is electrically connected to the driving device 120 so as to output a control signal to the driving device 120.

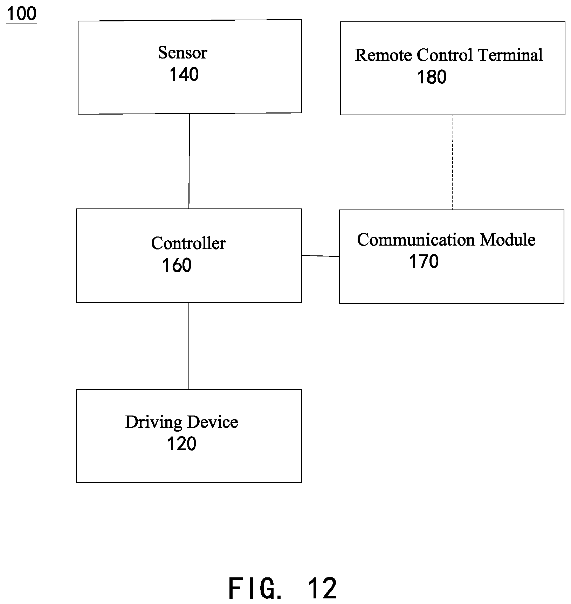

Referring to FIG. 12, FIG. 12 shows a functional block diagram of a seat adjustment structure 100 according to another embodiment of the present disclosure. As shown, the controller 160 is electrically connected to a communication module 170. The communication module 170 is wirelessly connected to a remote control terminal 180. The remote control terminal 180 may be, for example, a remote controller or an application (APP) installed and executed on a smart phone of a user. By executing the APP, a user operation interface is displayed on the smart phone, so that the user can operate to send a signal to the communication module 170 through the remote control terminal 180, for example, enabling or disabling the seat adjustment structure 100 or setting parameters of the seat adjustment structure 100.

In other embodiments, a mechanical switch may also be provided as an operation interface. The mechanical switch may be provided on a handle of the frame 300 (not shown).

A practical example is provided below to illustrate how a caregiver (i.e., the user) start the above-mentioned function of adjusting the tilt angle of the seat. When the caregiver pushes the child stroller on a downhill or unstable road section, the caregiver may use the APP installed in the smart phone or press the mechanical switch on the handle to enable the function of automatically adjusting the tilt angle. At this time, the tilt angle of the seat 200 can be dynamically adjusted, so that the seat 200 can be maintained at a fixed angle with respect to the horizontal plane or a plane set by the caregiver. As such, the child sitting in the child stroller will feel more comfortable even though the child stroller is moved on the uneven road section.

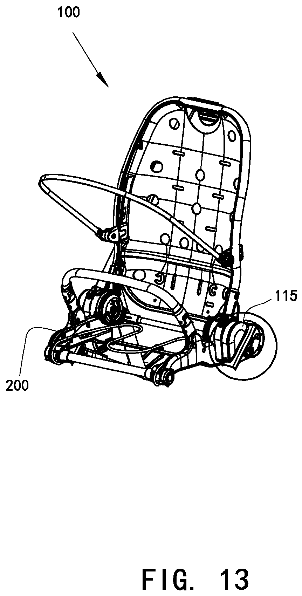

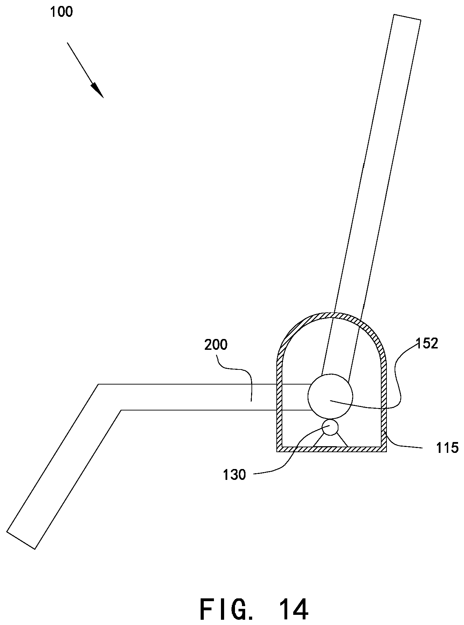

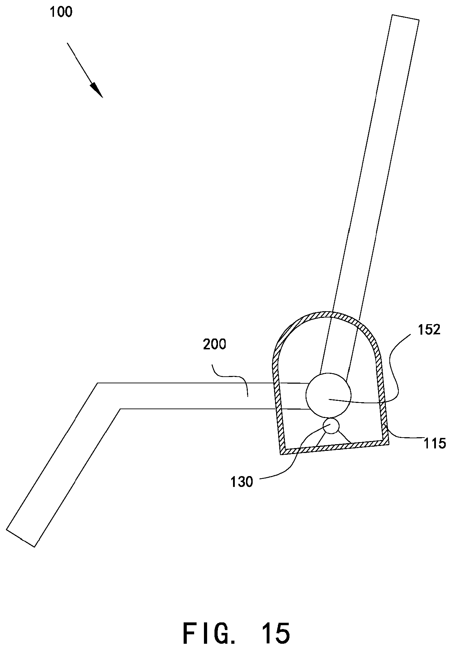

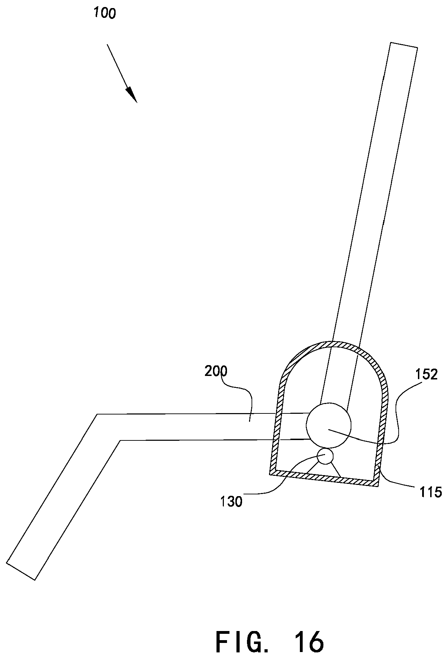

Referring to the embodiment shown in FIGS. 13-16, another configuration of the seat adjustment structure 100 is illustrated. As shown in FIG. 13, the seat adjustment structure 100 according to the present disclosure is accommodated in a housing 115 that is located at a connection between the seat 200 and the frame 300 (not shown in FIG. 13). The housing 115 may be a part of the frame 300, so as to prevent an increase of the weight of the frame 300 for the seat adjustment structure 100. As shown in FIG. 14, the seat 200 is fixedly connected to a transverse pivot shaft 152, and the transverse pivot shaft 152 is pivotally connected to the frame 300 (not shown). The actuating mechanism 130 is fixed to the housing 115, and thus to the frame 300. The actuating mechanism 130 is coupled to the transverse pivot shaft 152 through gear engagement, belt connection, worm gear-worm, etc., and directly drives the transverse pivot shaft 152 to rotate, thereby driving the seat 200 to pitch and rotate relative to the frame 300. The sensor 140 and the controller 160 are also installed in the housing 115 (not shown) and electrically connected to the actuating mechanism 130.

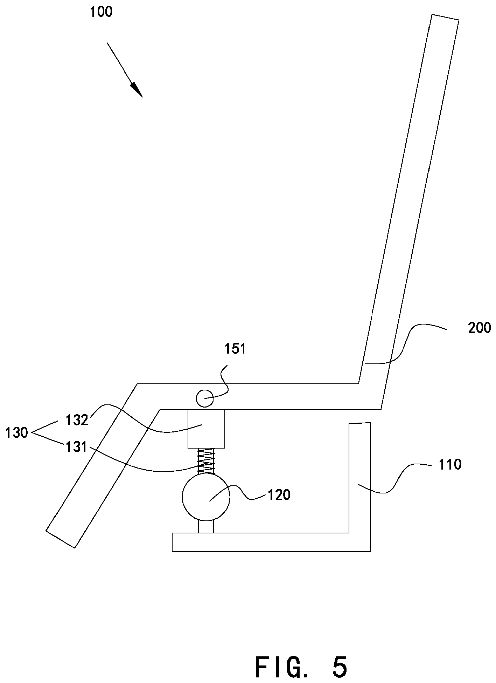

It should be understood that in the embodiment of FIGS. 13-16, the actuating mechanism 130 shown in FIGS. 5-7 may also be used to drive the seat 200 to pitch and rotate.

Referring to FIGS. 5-7, the specific operation of adjusting the pitch angle (or tilt angle) of the seat 200 according to the seat adjusting structure 100 of the present disclosure are now described.

As shown in FIG. 5, the actuating mechanism 130 is supported on the driving device 120. When the frame 300 (and the base 110) is in a horizontal position, the actuating mechanism 130 extends in a vertical direction. In the embodiment shown in FIG. 5, the actuating mechanism 130 includes a lead screw 131 and a screw sleeve 132, in which a lower end of the lead screw 131 is engaged in the driving device 120. For example, the lower end of the lead screw 131 is connected to the driving device 120 serving as a motor through a bevel gear. In this way, a transverse rotation of the driving device 120 is converted into a vertical rotation of the lead screw 131. The exterior of the lead screw 131 has a male thread, and the interior of the screw sleeve 132 has a female thread matched with the male thread of the lead screw 131. In this way, when the lead screw 131 rotates in different directions, the screw sleeve 132 will be raised or lowered along the lead screw 131, thereby changing the length of the entire actuating mechanism 130.

In other embodiments, the actuating mechanism 130 may also be in different forms. For example, the actuating mechanism 130 may be a hydraulic cylinder, and the driving device 120 is a hydraulic pump, which can pump liquid into the hydraulic cylinder to change a length of the hydraulic cylinder. The actuating mechanism 130 may also be a hinge-shear linkage structure, which may be driven to be raised or lowered. The actuating mechanism 130 may also be any suitable mechanical structure which has a variable length or is liftable in the prior art.

An upper end of the actuating mechanism 130 is connected to the seat 200 through a transverse first hinge shaft 151. The first hinge shaft 151 may be provided in a sliding groove (not shown) in a front-rear direction of the seat 200, so as to allow a position of the first hinge shaft 151 to be finely adjusted in the front-rear direction with the angle change of the actuating mechanism 130. In other embodiments, there is no sliding groove on the seat 200, and the driving device 120 is pivotally connected to the base 110 through another hinge shaft (not shown), so that the driving device 120 may be linked to be pivoted when the lead screw 131 is raised or lowered, so as to drive and adjust the tilt angle of the seat 200. Alternatively, the tilt angle of the seat 200 may be adjusted by pivoting the base 110, which is not limited in the present disclosure.

In the embodiment shown, the actuating mechanism 130 is located at the middle of the seat 200 in the transverse direction. It should be understood that in other embodiments, the actuating mechanism 130 may also be located at a side of the seat 200, such as a left side or a right side thereof. In other embodiments, a plurality of actuating mechanisms 130 may be provided, for example, at least two actuating mechanisms 130 are provided on the left and right sides of the seat 200, respectively, and the actuating mechanisms 130 may be driven by the same driving device 120 or driven by different driving devices 120.

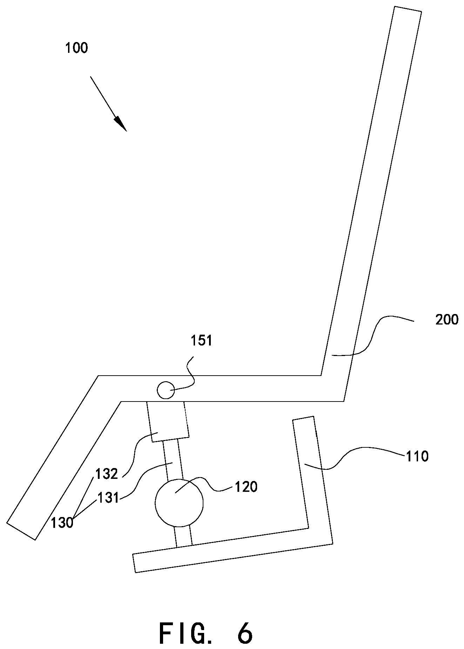

In the state shown in FIG. 6, the frame 300 is changed from the horizontal position to a tilting-forward position. In this case, the seat 200 will first change to the tilting-forward position along with the position of the frame 300. Accordingly, the sensor 140 detects a tilting-forward angle of the seat 200, and transmits tilt angle data to the driving device 120, so that the driving device 120 drives the actuating mechanism 130 to extend the length thereof, and then the seat 200 returns to the horizontal position.

In addition, the seat adjustment structure 100 is provided with an arithmetic unit that may calculate a current length of the actuating mechanism 130, and the arithmetic unit is electrically connected to the sensor 140 and/or the driving device 120. For example, the arithmetic unit is a grating counter or a counter of a stepping motor. In this way, when the driving device 120 changes the length of the actuating mechanism 130, it will automatically calculate the current length of the actuating mechanism 130 for being applied in a control program.

The sensor 140 is, for example, a gyroscope, which can detect its pitch angle relative to the horizontal plane in real time, however, the present disclosure is not limited thereto. When the sensor 140 is installed on the seat 200, the pitch angle of the sensor 140 itself corresponds to the pitch angle of the seat 200. When the sensor 140 is installed on the base 110, the pitch angle of the sensor 140 corresponds to the pitch angle of the base 110, and a pitch angle between the seat 200 and the base 110 may be calculated through: a length from a connecting point between the actuating mechanism 130 and the base 110 to the transverse pivot shaft of the seat 200, a length from a connecting point between the actuating mechanism 130 and the seat 200 to the transverse pivot shaft of the seat 200, and the length of the actuating mechanism 130, then the pitch angle of the seat 200 is calculated according to the pitch angle of the base 110 as well as the pitch angle between the seat 200 and the base 110.

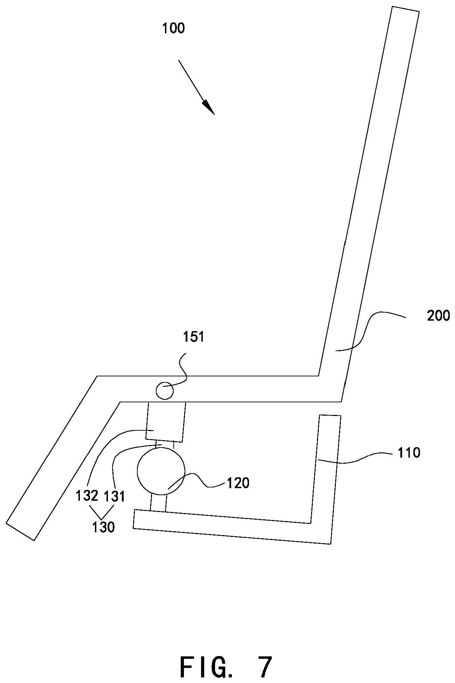

In the state shown in FIG. 7, the frame 300 is changed from the horizontal position to a rearward position. In this case, the seat 200 will first change to a tilting-rearward position along with the position of the frame 300. Accordingly, the sensor 140 detects the tilting-rearward angle of the seat 200 and transmits tilt angle data to the driving device 120, so that the driving device 120 is driven to shorten the length of the actuating mechanism 130, and then the seat 200 returns to the horizontal position.

During the above adjustment process, the actuating mechanism 130 will pitch and swing along with the base 110. In this way, the position of the first hinge shaft 151 relative to the seat 200 will be changed. For example, the sliding groove for accommodating the first hinge shaft 151 in the seat 200 allows such a position change.

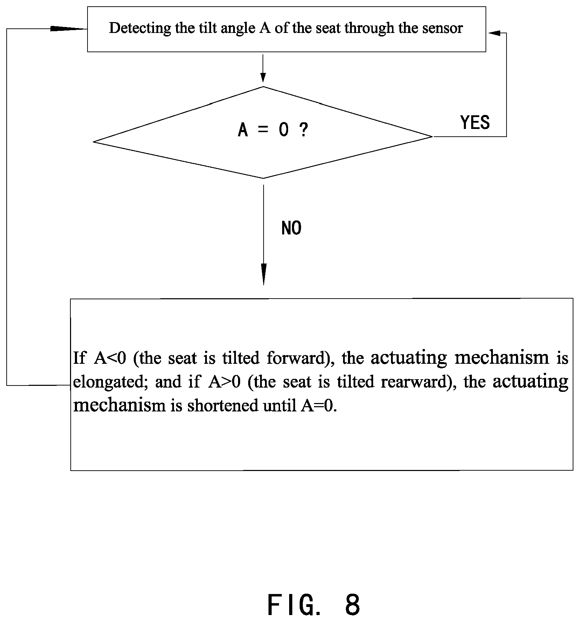

An operating method of the seat adjustment structure 100 according to the present disclosure will now be described with reference to FIGS. 8-10.

In the embodiment shown in FIG. 8, a sensitive adjustment strategy of "adjusting immediately" is used. That is, the sensor 140 detects the tilt angle A of the seat 200 in real time and transmits tilt angle data to the controller 160. When the sensor 140 detects that the tilt angle A is not zero, the controller 160 immediately controls the driving device 120 to drive. Specifically, when the tilt angle A is negative (A<0, and the seat is tilted forward), the actuating mechanism 130 is driven to be elongated. When the tilt angle A is positive (A>0, and the seat is tilted rearward), the actuating mechanism 130 is driven to be shortened. During the adjustment, the sensor 140 may continuously detect the tilt angle A of the seat 200, and the actuating mechanism 130 is not driven when the tilt angle A is equal to zero (A=0).

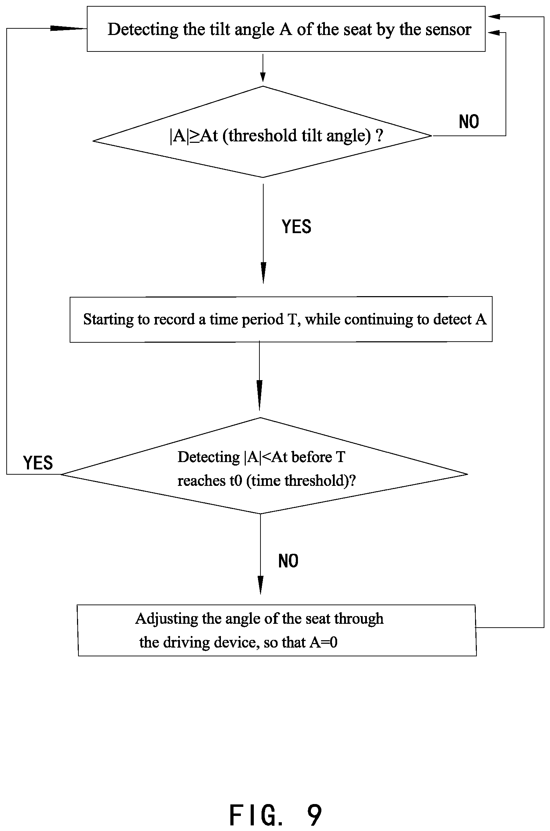

In the embodiment shown in FIG. 9, a "deferred adjustment" insensitive adjustment strategy is used. That is, a threshold tilt angle At is preset first. The sensor 140 detects the tilt angle A of the seat 200 in real time and transmits tilt angle data to the controller 160. When an absolute value |A| of the tilt angle A is less than the threshold tilt angle At, the seat adjustment structure 100 will not adjust the angle of the seat 200. When the absolute value |A| of the tilt angle A is greater than or equal to the threshold tilt angle At, the seat adjustment structure 100 will adjust the pitch angle (tilt angle) of the seat 200 to a value less than the threshold tilt angle At.

According to another "deferred adjustment" insensitive adjustment strategy, a time threshold T0 is further preset. When the absolute value |A| of the tilt angle A is greater than or equal to the threshold tilt angle At, the seat adjustment structure 100 will not immediately adjust the angle of the seat 200, but will start a timer and continue to monitor the tilt angle A while timing. When a time period T recorded by the timer is greater than or equal to the time threshold T0 and the absolute value |A| is not less than the threshold tilt angle At during this time period T, the driving device 120 will be started to reduce the absolute value |A| until the tilt angle A is less than the threshold tilt angle At; and when the time period T is less than the time threshold T0 and the absolute value |A| is less than the threshold tilt angle At during this time period T, the detection will be restarted and the timer will be reset.

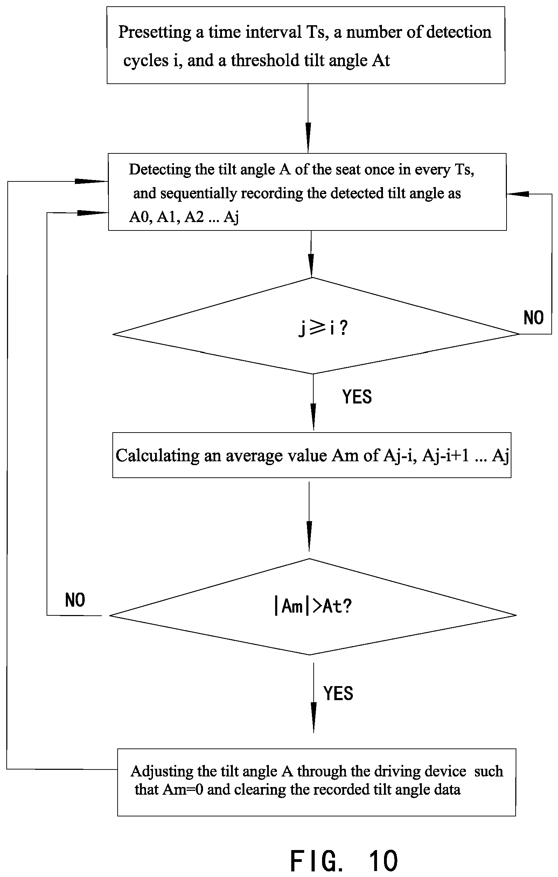

In the embodiment shown in FIG. 10, another "deferred adjustment" strategy is used. First, a fixed time interval Ts is preset, for example, 50 milliseconds, and then a number of detection cycles i is preset, for example, 100 cycles. The sensor 140 detects the tilt angle A of the seat 200 in every detection cycle, and sequentially records the detected tilt angle A in every detection cycle as A0, A1, A2,.. Aj. For example, the sensor 140 detects the tilt angle A of the seat 200 at a start time 0 of the program, and the detected tilt angel A is recorded as A0; and the sensor 140 detects the tilt angle A of the seat 200 again after 50 milliseconds, and the detected tilt angel A is recorded as A1, and so on. When the data serial number of the tilt angle is greater than or equal to the preset number of detection cycles at a certain moment, that is, j≥i, an average value Am of the tilt angle A in the previous i cycles (i.e.,, the average value Am of Aj-i, Aj-i+1...Aj) is calculated. If |Am|>At, the tilt angle of the seat 200 is adjusted by the driving device 120 so that Am=0, and the previously recorded tilt angle data is cleared. That is, after the seat angle is adjusted, the next detected tilt angle A of the seat will be recorded as A0, A1, ....

According to the above-mentioned several "deferred adjustment" strategies, a sensitivity of the seat adjustment structure 100 is reduced. In this way, when the child stroller 400 travels on a bumpy or undulating road surface, the seat adjusting structure 100 will not repeatedly adjust the angle of the seat 200, thus improving the intelligence of the whole equipment.

To sum up, the present disclosure provides a seat adjustment structure 100. It should be understood that the seat adjustment structure 100 may be used for the seat 200 of the child stroller 400 and other types of seats 200. The present disclosure also provides a child stroller 400 and a control method of the seat adjustment structure 100. According to the above device and method of the present disclosure, a pitch angle (or a tilt angle) of the seat 200 of the child stroller 400 can be beneficially automatically adjusted, so that the seat 200 is always kept in a horizontal position, thus providing a good use experience to users.

## Claims

1. A child stroller, comprising:
a frame (300);
a seat (200) arranged on the frame (300) and capable of pitching around a rotation axis relative to the frame (300); and
a seat adjustment structure (100) fixed to the frame (300) and at least partially located below the seat (200), the seat adjustment structure (100) comprising:
a driving device (120) installed on the frame (300) and coupled to the seat (200), the driving device (120) being configured to drive the seat (200) to pitch relative to the frame (300);
an actuating mechanism (130); and
a sensor (140) configured to acquire a tilt angle of the seat (200) relative to a horizontal plane and generate tilt angle data based on the tilt angle, wherein the sensor (140) is electrically connected to the driving device (120) so that the driving device (120) operates to adjust the tilt angle of the seat according to the tilt angle data.

2. The child stroller according to claim 1, **characterized in that**:
the driving device (120) is arranged between the frame (300) and the seat (200); and
the actuating mechanism (130) has an end connected to the driving device (120), and another end hinged below the seat (200) to support the seat (200), wherein the actuating mechanism (130) is capable of being driven by the driving device (120) to extend and retract, so that the seat (200) is driven to rotate relative to the frame (300) around a rotation axis, thereby changing an angle between the frame (300) and the seat (200).

3. The child stroller according to claim 2, **characterized in that**:
the rotation axis is a horizontal axis of the seat (200), and the actuating mechanism (130) extends and retracts in a vertical direction.

4. The child stroller according to claim 2 or 3, **characterized in that**:
the driving device (120) is a motor;
the actuating mechanism (130) includes a lead screw (131) and a screw sleeve (132), wherein the lead screw (131) has an end connected to the motor so that the motor drives the lead screw to rotate during operation thereof and has another end of screwed with one end of the screw sleeve (132), and the other end of the screw sleeve (132) is hinged below the seat (200).

5. The child stroller according to any of the claims 2 to 4, **characterized in that**:
the actuating mechanism (130) further includes a linkage structure hinged to the frame (300), and the driving device (120) is fixedly installed on the linkage structure.

6. The child stroller according to any of the claims 2 to 5, **characterized in that**:
the driving device (120) and the actuating mechanism (130) are located at a transversal middle location below the seat (200).

7. The child stroller according to any of the claims 2 to 6, **characterized in that**:
two sets of driving devices (120) and actuating mechanisms (130) are symmetrically and respectively located at two ends of the seat (200) in a transverse direction.

8. The child stroller according to any of the preceding claims,
wherein the seat (200) is pivotally installed to the frame (300) through a transverse pivot shaft; and
wherein the actuating mechanism (130) is located near an end of the seat (200) opposite to the transverse pivot shaft in a front-rear direction.

9. The child stroller according to any of claims 1 to 7, **characterized in that**:
the seat (200) is fixed to a transverse pivot shaft (152), and the transverse pivot shaft (152) is rotatably connected to the frame (300);
the driving device (120) is coupled to the transverse pivot shaft (152) and is capable of driving rotation of the transverse pivot shaft (152).

10. The child stroller according to any of the preceding claims, **characterized in that**:
the sensor (140) is installed on the seat (200) to acquire the tilt angle of the seat (200) relative to the horizontal plane; or
the sensor (140) is installed on the frame (300) to acquire the tilt angle of the frame (300) relative to the horizontal plane, and the tilt angle of the seat (200) relative to the horizontal plane is acquired by calculation according to the tile angle of the frame (300) as well as a positional relationship between the frame (300) and the seat (200).

11. The child stroller according to any of the preceding claims, **characterized in that**:
the child stroller further includes a base (110) fixed to the frame (300), and the driving device (120) is hinged to the base (110).

12. The child stroller according to any of the preceding claims, **characterized in that**:
the child stroller further comprises a controller (160) electrically connected to the sensor (140) and the driving device (120), wherein the controller (160) calculates a movement amount of the driving device (120) according to the tilt angle data acquired by the sensor (140), and converts the movement amount into a control signal and sends the control signal to the driving device (120) ; optionally
the child stroller further comprises a communication module (170) electrically connected to the controller (160) and wirelessly connected to a remote control terminal (180), wherein the remote control terminal (180) is capable of sending a signal to the communication module (170), and the communication module (170) transmits the signal to the controller (160).

13. A method for adjusting a tilt angle of a seat of a child stroller, **characterized in that**, the method comprises:
presetting a threshold tilt angle At and a time threshold T0;
detecting the tilt angle A of the seat (200) on the child stroller by a sensor (140) on the child stroller;
wherein, when an absolute value |A| of the tilt angle A is less than the threshold tilt angle (|A|<At), a driving device (120) on the child stroller is not started; and wherein, when the absolute value |A| of the tilt angle A is greater than or equal to the threshold tilt angle At (|A|≥At), timing is started while the tilt angle A is continuously detected, and when a time period T is greater than or equal to the time threshold T0 (T≥T0) and the absolute value |A| of the tilt angle A is not less than the threshold tilt angle At during the time period T, the driving device (120) is started to operate so as to reduce the absolute value |A| until the tilt angle A is less than the threshold tilt angle At (A<At), and wherein, when the time period T is less than the time threshold T0 (T<T0) and the absolute value |A| of the tilt angle A is less than the threshold tilt angle At (|A|<At) during the time period T, the tilt angle A is re-detected and the timing is cleared.

14. A method for adjusting a tilt angle of a seat of a child stroller, **characterized in that**, the method comprises:
presetting a fixed time interval Ts, a number of detection cycles i, and a threshold tilt angle At;
detecting the tilt angle A of the seat (200) on the child stroller once in every detection cycle through the sensor (140) on the child stroller, and sequentially recording the detected tilt angel A as A0, A1, A2 ... Aj;
calculating an average value Am of Aj-i, Aj-i+1 ... Aj when j≥i at any time;
if |Am|>At, adjusting the tilt angle A of the seat (200) through the driving device (120) on the child stroller such that Am=0 and clearing the recorded tilt angle data.

## Patentansprüche

1. Kinderwagen, aufweisend:
einen Rahmen (300);
einen Sitz (200), der an dem Rahmen (300) angeordnet ist und geeignet ist, sich um eine Drehachse relativ zu dem Rahmen (300) zu neigen; und
eine Sitzeinstellstruktur (100), die mit dem Rahmen (300) befestigt ist und zumindest teilweise unter dem Sitz (200) positioniert ist, wobei die Sitzeinstellstruktur (100) aufweist:
eine Antriebsvorrichtung (120), die an dem Rahmen (300) installiert ist und mit dem Sitz (200) gekoppelt ist, wobei die Antriebsvorrichtung (120) konfiguriert ist, um den Sitz (200) anzutreiben, so dass sich dieser relativ zu dem Rahmen (300) neigt;
einen Aktuatormechanismus (130); und
einen Sensor (140), der konfiguriert ist, um einen Kippwinkel des Sitzes (200) relativ zu einer horizontalen Ebene zu erfassen und Kippwinkeldaten basierend auf dem Kippwinkel zu erzeugen, wobei der Sensor (140) elektrisch mit der Antriebsvorrichtung (120) verbunden ist, so dass die Antriebsvorrichtung (120) operiert, um den Kippwinkel des Sitzes gemäß den Kippwinkeldaten einzustellen.

2. Kinderwagen nach Anspruch 1, **dadurch gekennzeichnet, dass**:
die Antriebsvorrichtung (120) zwischen dem Rahmen (300) und dem Sitz (200) angeordnet ist; und
der Aktuatormechanismus (130) ein Ende aufweist, das mit der Antriebsvorrichtung (120) verbunden ist, und ein anderes Ende aufweist, das unter dem Sitz (200) gelenkig verbunden ist, um den Sitz (200) zu stützen, wobei der Aktuatormechanismus (130) geeignet ist, durch die Antriebsvorrichtung (120) angetrieben zu werden, um auszufahren und sich zurückzuziehen, so dass der Sitz (200) so angetrieben wird, dass er sich relativ zu dem Rahmen (300) um eine Drehachse dreht und sich dadurch ein Winkel zwischen dem Rahmen (300) und dem Sitz (200) ändert.

3. Kinderwagen nach Anspruch 2, **dadurch gekennzeichnet, dass**:
die Drehachse eine horizontale Achse des Sitzes (200) ist und der Aktuatormechanismus (130) in einer vertikalen Richtung ausgefahren und zurückgezogen wird.

4. Kinderwagen nach Anspruch 2 oder 3, **dadurch gekennzeichnet, dass**:
die Antriebsvorrichtung (120) ein Motor ist;
der Aktuatormechanismus (130) eine Führungsschraube (131) und eine Schraubenhülse (132) aufweist, wobei die Führungsschraube (131) ein Ende aufweist, das mit dem Motor verbunden ist, so dass der Motor die Führungsschraube antreibt, um sich während ihres Betriebs zu drehen, und ein anderes Ende aufweist, das mit einem Ende der Schraubenhülse (132) verschraubt ist, wobei das andere Ende der Schraubenhülse (132) gelenkig unter dem Sitz (200) verbunden ist.

5. Kinderwagen nach einem der Ansprüche 2 bis 4, **dadurch gekennzeichnet, dass**:
der Aktuatormechanismus (130) ferner eine Verbindungsstruktur aufweist, die gelenkig mit dem Rahmen (300) verbunden ist, und die Antriebsvorrichtung (120) fest an der Verbindungsstruktur installiert ist.

6. Kinderwagen nach einem der Ansprüche 2 bis 5, **dadurch gekennzeichnet, dass**:
die Antriebsvorrichtung (120) und der Aktuatormechanismus (130) an einer transversalen mittleren Position unter dem Sitz (200) positioniert sind.

7. Kinderwagen nach einem der Ansprüche 2 bis 6, **dadurch gekennzeichnet, dass**:
zwei Sätze von Antriebsvorrichtungen (120) und Aktuatormechanismen (130) symmetrisch und an zwei ensprechenden Enden des Sitzes (200) in einer Querrichtung positioniert sind.

8. Kinderwagen nach einem der vorhergehenden Ansprüche,
wobei der Sitz (200) durch eine Quer-Schwenkwelle schwenkbar an dem Rahmen (300) installiert ist; und
wobei der Aktuatormechanismus (130) in der Nähe eines Endes des Sitzes (200) entgegengesetzt zu der Quer-Schwenkwelle in einer Vorwärts-Rückwärts-Richtung positioniert ist.

9. Kinderwagen nach einem der Ansprüche 1 bis 7, **dadurch gekennzeichnet, dass**:
der Sitz (200) an einer Quer-Schwenkwelle (152) befestigt ist und die Quer-Schwenkwelle (152) drehbar mit dem Rahmen (300) verbunden ist;
die Antriebsvorrichtung (120) mit der Quer-Schwenkwelle (152) gekoppelt ist und geeignet ist, eine Drehung der Quer-Schwenkwelle (152) anzutreiben.

10. Kinderwagen nach einem der vorhergehenden Ansprüche, **dadurch gekennzeichnet, dass**:
der Sensor (140) an dem Sitz (200) installiert ist, um den Kippwinkel des Sitzes (200) relativ zu der horizontalen Ebene zu erfassen; oder
der Sensor (140) an dem Rahmen (300) installiert ist, um den Kippwinkel des Rahmens (300) relativ zu der horizontalen Ebene zu erfassen, und der Kippwinkel des Sitzes (200) relativ zu der horizontalen Ebene erfasst wird durch Berechnung gemäß dem Kippwinkel des Rahmens (300) sowie gemäß einer Positionsbeziehung zwischen dem Rahmen (300) und dem Sitz (200).

11. Kinderwagen nach einem der vorhergehenden Ansprüche, **dadurch gekennzeichnet, dass**:
der Kinderwagen ferner eine Basis (110) aufweist, die an dem Rahmen (300) befestigt ist, und die Antriebsvorrichtung (120) gelenkig mit der Basis (110) verbunden ist.

12. Kinderwagen nach einem der vorhergehenden Ansprüche, **dadurch gekennzeichnet, dass**:
der Kinderwagen ferner eine Steuerung (160) aufweist, die elektrisch mit dem Sensor (140) und der Antriebsvorrichtung (120) verbunden ist, wobei die Steuerung (160) eine Bewegungsgröße der Antriebsvorrichtung (120) berechnet gemäß den von dem Sensor (140) erfassten Kippwinkeldaten, und die Steuerung (160) die Bewegungsgröße in ein Steuersignal umwandelt und das Steuersignal an die Antriebsvorrichtung (120) sendet; wobei optional
der Kinderwagen ferner ein Kommunikationsmodul (170) aufweist, das elektrisch mit der Steuerung (160) verbunden ist und drahtlos mit einem Fernbedienungsterminal (180) verbunden ist, wobei das Fernbedienungsterminal (180) geeignet ist, ein Signal an das Kommunikationsmodul (170) zu senden, und das Kommunikationsmodul (170) das Signal an die Steuerung (160) überträgt.

13. Verfahren zum Einstellen eines Kippwinkels eines Sitzes eines Kinderwagens, **dadurch gekennzeichnet, dass** das Verfahren umfasst:
Voreinstellen eines Schwellen-Kippwinkels At und eines Schwellen-Zeitwerts T0;
Erfassen des Kippwinkels A des Sitzes (200) an dem Kinderwagen durch einen Sensor (140) an dem Kinderwagen;
wobei, wenn ein Absolutwert |A| des Kippwinkels A weniger als der Schwellen-Kippwinkel At ist (|A|< At), eine Antriebsvorrichtung (120) an dem Kinderwagen nicht gestartet wird; und wobei, wenn der Absolutwert |A| des Kippwinkels A größer als oder gleich dem Schwellen-Kippwinkel At ist (|A| ≥ At), eine Zeitnahme gestartet wird, wobei der Kippwinkel A kontinuierlich erfasst wird, und wenn ein Zeitintervall T größer als oder gleich dem Schwellen-Zeitwert T0 (T≥T0) ist und der Absolutwert |A| des Kippwinkels A nicht kleiner als der Schwellen-Kippwinkel At während des Zeitintervalls T ist, die Antriebsvorrichtung (120) gestartet wird, um zu operieren, um den Absolutwert |A| zu reduzieren, bis der Kippwinkel A kleiner als der Schwellen-Kippwinkel At ist (A< At), und wobei, wenn das Zeitintervall T kleiner als der Schwellen-Zeitwert T0 (T<T0) ist und der Absolutwert |A| des Kippwinkels A kleiner als der Schwellen-Kippwinkel At (|A|< At) während des Zeitintervalls T ist, der Kippwinkel A erneut erfasst wird und die Zeitnahme gelöscht wird.

14. Verfahren zum Einstellen eines Kippwinkels eines Sitzes eines Kinderwagens, **dadurch gekennzeichnet, dass** das Verfahren umfasst:
Voreinstellen eines festen Zeitintervalls Ts, einer Anzahl von Erfassungszyklen i und eines Schwellen-Kippwinkels At;
Erfassen des Kippwinkels A des Sitzes (200) an dem Kinderwagen einmal in jedem Erfassungszyklus durch den Sensor (140) an dem Kinderwagen und sequenzielles Aufzeichnen des erfassten Kippwinkels A als A0, A1, A2 ... Aj;
Berechnen eines Durchschnittswerts Am von Aj-i, Aj-i+1 ... Aj, wenn j ≥i zu jeder Zeit;
wenn |Am|> At, Einstellen des Kippwinkels A des Sitzes (200) durch die Antriebsvorrichtung (120) an dem Kinderwagen, so dass Am=0, und Löschen der aufgezeichneten Kippwinkeldaten.

## Revendications

1. Poussette, **caractérisée en ce que** la poussette comprend :
un châssis (300) ;
un siège (200) prévu sur le châssis (300) et capable de pivoter autour d'un axe de rotation par rapport au châssis (300) ; et
une structure de réglage de siège (100) fixée sur le châssis (300) et située au moins partiellement sous le siège (200), la structure de réglage de siège (100) comprenant :
un dispositif d'entraînement (120) installé sur le châssis (300) et couplé au siège (200), le dispositif d'entraînement (120) étant configuré pour entraîner le siège (200) afin qu'il pivote par rapport au châssis (300) ;
un mécanisme d'actionnement (130) ; et
un capteur (140) configuré pour acquérir un angle d'inclinaison du siège (200) par rapport à un plan horizontal et pour générer des données d'angle d'inclinaison sur la base de l'angle d'inclinaison, dans laquelle le capteur (140) est relié électriquement au dispositif d'entraînement (120) de sorte que le dispositif d'entraînement (120) fonctionne pour régler l'angle d'inclinaison du siège selon les données d'angle d'inclinaison.

2. Poussette selon la revendication 1, **caractérisée en ce que** :
le dispositif d'entraînement (120) est prévu entre le châssis (300) et le siège (200) ; et
le mécanisme d'actionnement (130) possède une extrémité reliée au dispositif d'entraînement (120), et une autre extrémité articulée sous le siège (200) afin de supporter le siège (200), dans laquelle le mécanisme d'actionnement (130) peut être entraîné par le dispositif d'entraînement (120) afin de se déployer et de se rétracter, de sorte que le siège (200) soit entraîné afin de pivoter par rapport au châssis (300) autour d'un axe de rotation, de façon à changer un angle entre le châssis (300) et le siège (200).

3. Poussette selon la revendication 2, **caractérisée en ce que** :
l'axe de rotation est un axe horizontal du siège (200), et le mécanisme d'actionnement (130) se déploie et se rétracte dans une direction verticale.

4. Poussette selon la revendication 2 ou 3, **caractérisée en ce que** :
le dispositif d'entraînement (120) est un moteur ;
le mécanisme d'actionnement (130) comprend une vis-mère (131) et une douille de vis (132), dans laquelle la vis-mère (131) possède une extrémité reliée au moteur de sorte que le moteur entraîne la vis-mère afin qu'elle tourne pendant le fonctionnement de celui-ci, et possède une autre extrémité vissée sur une extrémité de la douille de vis (132), et l'autre extrémité de la douille de vis (132) est articulée sous le siège (200).

5. Poussette selon l'une quelconque des revendications 2 à 4, **caractérisée en ce que** :
le mécanisme d'actionnement (130) comprend en outre une structure de liaison articulée sur le châssis (300), et le dispositif d'entraînement (120) est installé de manière fixe sur la structure de liaison.

6. Poussette selon l'une quelconque des revendications 2 à 5, **caractérisée en ce que** :
le dispositif d'entraînement (120) et le mécanisme d'actionnement (130) se trouvent à un emplacement intermédiaire transversal sous le siège (200).

7. Poussette selon l'une quelconque des revendications 2 à 6, **caractérisée en ce que** :
deux groupes de dispositifs d'entraînement (120) et de mécanismes d'actionnement (130) sont symétriquement et respectivement situés à deux extrémités du siège (200) dans une direction transversale.

8. Poussette selon l'une quelconque des revendications précédentes,
dans laquelle le siège (200) est installé de manière pivotante sur le châssis (300) par le biais d'un axe de pivot transversal ; et
dans laquelle le mécanisme d'actionnement (130) se trouve près d'une extrémité du siège (200) opposée à l'axe de pivot transversal dans une direction avant-arrière.

9. Poussette selon l'une quelconque des revendications 1 à 7, **caractérisée en ce que** :
le siège (200) est fixé sur un axe de pivot transversal (152), et l'axe de pivot transversal (152) est relié de manière rotative au châssis (300) ;
le dispositif d'entraînement (120) est couplé à l'axe de pivot transversal (152) et peut provoquer la rotation de l'axe de pivot transversal (152).

10. Poussette selon l'une quelconque des revendications précédentes, **caractérisée en ce que** :
le capteur (140) est installé sur le siège (200) afin d'acquérir l'angle d'inclinaison du siège (200) par rapport au plan horizontal ; ou
le capteur (140) est installé sur le châssis (300) afin d'acquérir l'angle d'inclinaison du châssis (300) par rapport au plan horizontal, et l'angle d'inclinaison du siège (200) par rapport au plan horizontal est acquis par calcul selon l'angle d'inclinaison du châssis (300) et une relation de position entre le châssis (300) et le siège (200).

11. Poussette selon l'une quelconque des revendications précédentes, **caractérisée en ce que** :
la poussette comprend en outre une base (110) fixée sur le châssis (300), et le dispositif d'entraînement (120) est articulé sur la base (110).

12. Poussette selon l'une quelconque des revendications précédentes, **caractérisée en ce que** :
la poussette comprend en outre un dispositif de commande (160) relié électriquement au capteur (140) et au dispositif d'entraînement (120), dans laquelle le dispositif de commande (160) calcule une quantité de déplacement du dispositif d'entraînement (120) selon les données d'angle d'inclinaison acquises par le capteur (140), et convertit la quantité de déplacement en un signal de commande et envoie le signal de commande au dispositif d'entraînement (120) ; éventuellement
la poussette comprend en outre un module de communication (170) relié électriquement au dispositif de commande (160) et relié sans fil à un terminal de commande à distance (180), dans laquelle le terminal de commande à distance (180) peut envoyer un signal au module de communication (170), et le module de communication (170) transmet le signal au dispositif de commande (160).

13. Procédé d'ajustement d'un angle d'inclinaison d'un siège d'une poussette, **caractérisé en ce que** le procédé comprend :
la prédéfinition d'un angle d'inclinaison seuil At et d'un seuil de durée T0 ;
la détection de l'angle d'inclinaison A du siège (200) sur la poussette par un capteur (140) sur la poussette ;
dans lequel, lorsqu'une valeur absolue |A| de l'angle d'inclinaison A est inférieure à l'angle d'inclinaison seuil (|A|<At), un dispositif d'entraînement (120) sur la poussette n'est pas démarré, et dans lequel, lorsque la valeur absolue |A| de l'angle d'inclinaison A est supérieure ou égale à l'angle d'inclinaison seuil At (|A|≥At), un chronométrage est démarré tandis que l'angle d'inclinaison A est détecté en continu, et, lorsqu'une période T est supérieure ou égale au seuil de durée T0 (T≥T0) et la valeur absolue |A| de l'angle d'inclinaison A n'est pas inférieure à l'angle d'inclinaison seuil At pendant la période T, le dispositif d'entraînement (120) est démarré de façon à réduire la valeur absolue |A| jusqu'à ce que l'angle d'inclinaison A soit inférieur à l'angle d'inclinaison seuil At (A<At), et dans lequel, lorsque la période T est inférieure au seuil de durée T0 (T<T0) et la valeur absolue |A| de l'angle d'inclinaison A est inférieure à l'angle d'inclinaison seuil At (|A|<At) pendant la période T, l'angle d'inclinaison A est détecté à nouveau et le chronométrage est arrêté.

14. Procédé d'ajustement d'un angle d'inclinaison d'un siège d'une poussette, **caractérisé en ce que** le procédé comprend :
la prédéfinition d'un intervalle de temps fixe Ts, d'un nombre de cycles de détection i, et d'un angle d'inclinaison seuil At ;
la détection de l'angle d'inclinaison A du siège (200) sur la poussette une fois lors de chaque cycle de détection par le biais du capteur (140) sur la poussette, et l'enregistrement successif de l'angle d'inclinaison détecté A sous la forme A0, A1, A2 ... Aj ;
le calcul d'une valeur moyenne Am de Aj-i, Aj-i+1 ... Aj lorsque j≥i à tout moment ;
si |Am|>At, le réglage de l'angle d'inclinaison A du siège (200) par le biais du dispositif d'entraînement (120) sur la poussette de sorte que Am=0, et l'effacement des données d'angle d'inclinaison enregistrées.
